(19) Europäisches Patentamt
European Patent Office
Office européen des brevets

(11) **EP 4 797 647 A1**

(12) **EUROPEAN PATENT APPLICATION**
published in accordance with Art. 153(4) EPC

(43) Date of publication:
**26.08.2026 Bulletin 2026/35**

(21) Application number: **24889087.3**

(22) Date of filing: **05.11.2024**

(51) International Patent Classification (IPC):
***H04L 43/0864*** *(2022.01)*

(52) Cooperative Patent Classification (CPC):
**H04L 43/0864**

(86) International application number:
**PCT/KR2024/017280**

(87) International publication number:
**WO 2025/100899 (15.05.2025 Gazette 2025/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.11.2023 KR 20230151986**

(71) Applicant: **Samsung Electronics Co., Ltd.**
**Suwon-si, Gyeonggi-do 16677 (KR)**

(72) Inventor: **YANG, Hyunkoo**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

# (54) METHOD AND APPARATUS FOR MEDIA-BASED ROUND-TRIP TIME MEASUREMENT

(57) The disclosure relates to a 5G or 6G communication system for supporting a higher data transmission rate. A method for operation of a first device in a wireless communication system, according to an embodiment of the present disclosure, may comprise the steps of: negotiating a media parameter with a second device by using a session description protocol (SDP); transmitting, to the second device, first real-time transport protocol (RTP) data including a first extension header associated with a round-trip time (RTT); and in response to the first RTP data, receiving, from the second device, second RTP data including a second extension header associated with the RTT, wherein the SDP for the negotiation for the media parameter includes information for associating the first extension header with the second extension header.

FIG. 2

210
Client
220
Server
230
Send request@t1
RTT
Network
Receive request@t2
Send response@t3
Receive response@t4



Processed by Luminess, 75001 PARIS (FR)

## Description

### Technical Field

The present disclosure relates to a wireless communication system, and more particularly, to a method and device for measuring a round-trip time (RTT) in a wireless network such as a 5th generation (5G) network.

### Background Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation

capability by utilizing ultra-high-performance communication and computing resources.

As various services may be provided as a result of the advancements in wireless communication systems as described above, methods for effectively providing such services are required, and in particular, a method for efficiently performing real-time media transport for voice and video calls and the like is required.

## Disclosure of Invention

### Technical Problem

The present disclosure aims to provide a method and device capable of effectively providing a real-time communication service in a wireless communication system.

### Solution to Problem

According to an embodiment of the present disclosure, an operation method of a first device in a wireless communication system may include negotiating media parameters with a second device by using a session description protocol (SDP), transmitting, to the second device, first real-time transport protocol (RTP) data including a first header extension associated with a round-trip time (RTT), and, in response to the first RTP data, receiving, from the second device, second RTP data including a second header extension associated with the RTT, wherein the SDP for the negotiation of the media parameters includes information for associating the first header extension with the second header extension.

According to an embodiment of the present disclosure, an operation method of a second device in a wireless communication system may include negotiating media parameters with a first device by using a SDP, receiving, from the first device, first RTP data including a first header extension associated with an RTT, and, in response to the first RTP data, transmitting, to the first device, second RTP data including a second header extension associated with the RTT, wherein the SDP for the negotiation of the media parameters includes information for associating the first header extension with the second header extension.

According to an aspect of an embodiment of the present disclosure, there is provided a first device including a transceiver, and at least one controller coupled to the transceiver, and the at least one controller is configured to negotiate media parameters with a second device by using a SDP, transmit, to the second device, first RTP data including a first header extension associated with an RTT, and, in response to the first RTP data, receive, from the second device, second RTP data including a second header extension associated with the RTT, wherein the SDP for the negotiation of the media parameters includes information for associating the first header extension with the second header extension.

According to an aspect of an embodiment of the present disclosure, there is provided a second device including a transceiver, and at least one controller coupled to the transceiver, and the at least one controller is configured to negotiate media parameters with a second device by using a SDP, receive, from the first device, first RTP data including a first header extension associated with an RTT, and, in response to the first RTP data, transmit, to the first device, second RTP data including a second header extension associated with the RTT, wherein the SDP for the negotiation of the media parameters includes information for associating the first header extension with the second header extension.

According to an embodiment of the present disclosure, a method performed by a first media transceiver device in a wireless communication system may include transmitting an RTT measurement request to a second media transceiver device, receiving an RTT measurement response from the second media transceiver device, and calculating, based on the RTT measurement request and the RTT measurement response, a media-based RTT.

According to an embodiment of the present disclosure, the RTT measurement request and the RTT measurement response may be included in a packet carrying media data of a media service.

The technical problems to be addressed in various embodiments of the present disclosure are not limited to those described above, and other technical problems not described herein will be clearly understood by those of ordinary skill in the art to which the present disclosure pertains from the following description.

### Advantageous Effects of Invention

According to an embodiment of the present disclosure, a real-time communication service may be effectively provided in a mobile communication system.

Effects obtainable from the present disclosure are not limited to the effects described in various embodiments, and other effects not described herein will be clearly understood by those of ordinary skill in the art from the following description.

## Brief Description of Drawings

FIG. 1 is a diagram illustrating a 5th generation (5G) system architecture for a real-time communication service in a wireless communication system, according to an embodiment of the present disclosure.
FIG. 2 is a diagram illustrating an example of a method of measuring a round-trip time (RTT) in a wireless communication system, according to an embodiment of the present disclosure.
FIG. 3 is a diagram illustrating a media-based RTT measurement method according to an embodiment of the present disclosure.
FIG. 4 is a diagram illustrating an example of a media transport packet structure in a wireless communication system, according to an embodiment of the present disclosure.
FIG. 5 is a diagram illustrating a relationship between a media transport session and an RTP stream constituting a real-time communication service in a wireless communication system, according to an embodiment of the present disclosure.
FIG. 6 is a diagram illustrating an example of an RTT request header extension according to an embodiment of the present disclosure.
FIG. 7 is a diagram illustrating an example of an RTT response header extension according to an embodiment of the present disclosure.
FIG. 8 is a diagram illustrating an example of an RTT request header extension according to an embodiment of the present disclosure.
FIG. 9 is a diagram illustrating an example of an RTT response header extension according to an embodiment of the present disclosure.
FIG. 10 is a diagram illustrating a structure of a device according to an embodiment of the present disclosure.

## Mode for the Invention

Hereinafter, operation principles of the present disclosure will be described in detail with reference to the accompanying drawings. In the following description of the present disclosure, when it is determined that detailed descriptions of related known functions or configurations may unnecessarily obscure the subject matter of the present disclosure, the descriptions thereof will be omitted. Furthermore, the terms to be described below are defined in consideration of functions described in the present disclosure and may vary according to practices or a user’s or operator’s intent. Therefore, definition of the terms should be made based on the overall descriptions in the present specification.

For the same reason, in the accompanying drawings, some components are exaggerated, omitted, or schematically illustrated. Furthermore, the size of each element does not entirely reflect an actual size thereof. In the drawings, like reference numerals refer to the same or corresponding elements throughout.

Advantages and features of the present disclosure and methods of accomplishing the same will be more readily appreciated by referring to the following description of embodiments and the accompanying drawings. However, the present disclosure should not be construed as being limited to embodiments set forth below but may be embodied in many different forms; rather, the present embodiments are provided so that the present disclosure will be thorough and complete and will fully convey the concept of the present disclosure to those of ordinary skill in the art, and the present disclosure will only be defined by the appended claims. Throughout the specification, like reference numerals refer to like elements.

It will be understood that each block of a flowchart in the drawings and combinations of blocks of the flowchart may be performed by computer program instructions. These computer program instructions may be loaded into a processor of a general-purpose computer, a special-purpose computer, or other programmable data processing equipment, and thus, the instructions performed via the processor of the computer or other programmable data processing equipment generate a means for performing functions specified in the flowchart block(s). The computer program instructions may also be stored in a computer-executable or computer-readable memory capable of directing the computer or other programmable data processing equipment to implement functions in a specific manner, and thus, the instructions stored in the computer-executable or computer-readable memory are capable of producing an article of manufacture including instruction means for performing the functions described in the flowchart block(s). The computer program instructions may also be loaded into a computer or other programmable data processing equipment, and thus, instructions for operating the computer or the other programmable data processing equipment by generating a computer-executed process when a series of operations are performed in the computer or the other programmable data processing equipment may provide operations for performing the functions described in the flowchart block(s).

Furthermore, each block may represent a portion of a module, segment, or code that includes one or more executable instructions for executing specified logical function(s). It should also be noted that, in some alternative

implementations, functions mentioned in blocks may occur out of order. For example, two blocks illustrated in succession may be executed substantially simultaneously, or the blocks may sometimes be executed in reverse order depending on functions corresponding thereto.

As used herein, the term '...unit' denotes a software element or a hardware element such as a field-programmable gate array (FPGA) or an application-specific integrated circuit (ASIC), and performs certain functions. However, the term '...unit' is not limited to software or hardware. The '...unit' may be configured to be in an addressable storage medium or configured to operate one or more processors. Thus, the term '...unit' may include, for example, elements such as software elements, object-oriented software elements, class elements, and task elements, processes, functions, attributes, procedures, subroutines, segments of program code, drivers, firmware, micro-codes, circuits, data, a database, data structures, tables, arrays, and variables. Functions provided by the elements and '...units' may be combined into a smaller number of elements and '...units', or may be further divided into additional elements and '...units'. Furthermore, the elements and '...units' may be implemented to operate one or more central processing units (CPUs) in a device or security multimedia card. In addition, in an embodiment, the '...unit' may include one or more processors.

In the following description of the present disclosure, when it is determined that detailed descriptions of related known functions or configurations may unnecessarily obscure the subject matter of the present disclosure, the descriptions thereof will be omitted. Hereinafter, an embodiment of the present disclosure will be described in detail with reference to the accompanying drawings.

As used in the following description, terms for identifying access nodes, terms referring to network entities (network functions (NFs)), terms for referring to messages, terms for referring to interfaces between NFs, terms for referring to various types of identification information, etc. are exemplified for convenience of description. Accordingly, the present disclosure is not limited to terms to be described below, and other terms representing objects having the equivalent technical meaning may be used.

Terms used in the present disclosure are used only to describe specific embodiments, and may not be intended to limit the scope of other embodiments. Singular expressions used herein are intended to include plural expressions as well unless the context clearly indicates otherwise. All the terms used herein, which include technical or scientific terms, may have the same meaning that is generally understood by one of ordinary skill in the art described in the present disclosure. Among the terms used in the present disclosure, terms defined in general dictionaries may be construed as having meanings identical or similar to those in the context of the related art, and unless explicitly defined in the present disclosure, they are not to be interpreted in an idealized or overly formal sense. In some cases, even the terms defined in the present disclosure should not be construed to exclude embodiments of the present disclosure.

In various embodiments of the present disclosure described below, a hardware-based approach is described as an example. However, because the various embodiments of the present disclosure include technologies using both hardware and software, the embodiments of the present disclosure do not exclude a software-based approach.

Hereinafter, for convenience of description, the present disclosure uses terms and names defined in long-term evolution (LTE) and new radio (NR) standards which are the latest standards defined by the 3rd Generation Partnership Project (3GPP) among existing communication standards. However, the present disclosure is not limited to the terms and names but may also be identically applied to systems that comply with other standards. In particular, the present disclosure may be applied to 3GPP NR (5th generation (5G) mobile communication standard). Furthermore, an embodiment of the present disclosure may be applied to other communication systems having similar technical backgrounds and channel configurations. In addition, an embodiment of the present disclosure may be applied to other communication systems through some modifications within a range that does not greatly depart from the scope of the present disclosure, as determined by those skilled in the art.

Hereinafter, the present disclosure relates to a mobile communication system, and in a mobile communication system supporting a real-time communication service, when packets constituting a media stream are processed according to the same policy, i.e., when a difference in an effect of media data included in each packet on the quality of service is not considered, it is impossible to provide quality of service optimized for given network resources. In this regard, a technique for improving media quality and saving network resources by utilizing the difference in the effect of the media data included in each packet on the quality of service in a wireless communication system is described.

Terms referring to signals, terms referring to channels, terms referring to control information, terms referring to network entities, terms referring to components of a device, and the like used in the following description are merely examples for convenience of description. Thus, the present disclosure is not limited to terms described below, and other terms having equivalent technical meanings may be used.

In addition, although various embodiments of the present disclosure are described using terms used in some communication standards (e.g., 3GPP), these are merely examples for description. Various embodiments of the present disclosure may also be easily modified and applied to other communication systems.

As described below with respect to a real-time communication service, a user may negotiate service configuration information, including media information, with a real-time media server or another user by using an application provided by a real-time communication application provider, establish a real-time communication media session based on

the service configuration information, and exchange media data such as voice and video in real time.

A round-trip time (RTT) may refer to a time taken for a packet to be transmitted from a transmitting side and delivered to a receiving side via an arbitrary number of intermediate nodes or a communication network, and for a response signal thereto to reach the transmitting side again via multiple intermediate nodes or a communication network. In this case, the RTT may include a request processing time, which is a time taken for the receiving side to process a received request and generate and transmit a response. The request processing time may vary depending on a system layer that processes an RTT measurement request. For example, when measuring an RTT of an Internet Protocol (IP) packet by using an Internet Control Message Protocol (ICMP), the request processing time may be a time taken for the receiving side to generate and transmit an ICMP echo reply in response to an ICMP echo request received by the receiving side. In another example, in a Transmission Control Protocol (TCP), the request processing time may be a time taken for the receiving side to generate and transmit an acknowledgement after receiving a sample segment for RTT measurement transmitted by the transmitting side.

The above-described RTT measurement methods operate based on client-server transactions. Therefore, it is difficult to apply such methods to a real-time communication service in which service participants continuously exchange real-time media data with each other. In addition, it is desirable that the request processing time in the real-time communication service include a media processing time rather than a simple packet processing time.

Effects obtainable from the present disclosure are not limited to the above-described effects, and other effects not described herein will be clearly understood by those of ordinary skill in the art from the following description.

In addition, in the following description, terms and names defined in standards for a 5G system (5GS) are used for convenience of description. However, the present disclosure is not limited by the terms and names described above, but may also be equally applied to systems conforming to other standards.

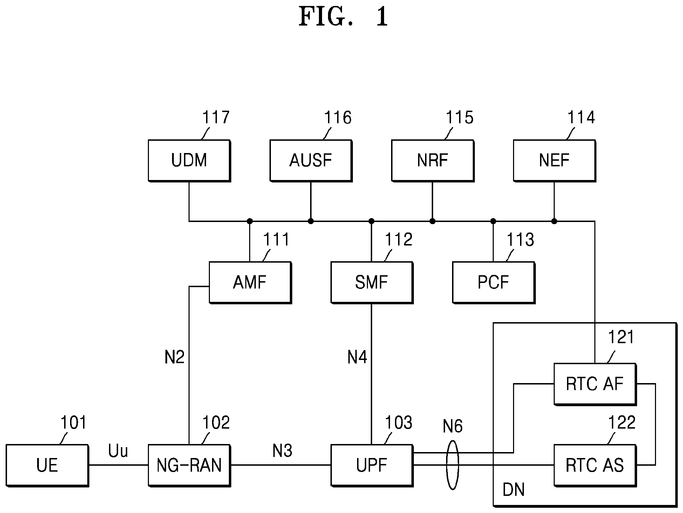

FIG. 1 is a diagram illustrating a 5GS architecture for a real-time communication service in a wireless communication system, according to an embodiment of the present disclosure.

Referring to FIG. 1, a 5GS may include a UE 101, a next-generation radio access network (NG-RAN) 102 including a base station, a user plane function (UPF) entity 103, an access and mobility management function (AMF) entity 111, a session management function (SMF) entity 112, a policy control function (PCF) entity 113, a network exposure function (NEF) entity 114, a network repository function (NRF) entity 115, an authentication server function (AUSF) entity 116, a unified data management (UDM) entity 117, a real-time communication application function (RTC AF) entity 121, and an RTC application server (RTC AS) entity 122. The 5GS is not limited to the above example, and may include fewer or more components than those illustrated in FIG. 1. In addition, each entity may be referred to as a network entity, an NF, or an NF apparatus.

Referring to FIG. 1, each network function (NF) of the 5GS is described as a "network entity" or a "network function" itself. However, those of ordinary skill in the art will appreciate that an NF and/or an NF apparatus may be implemented in one or more specific servers, and two or more NFs performing the same operation may be implemented in one server.

Furthermore, according to the present disclosure, in some cases, one NF or two or more NFs may be implemented in the form of a single network slice. A network slice may be created based on a specific purpose. For example, the network slice may be configured for specific subscriber groups to provide the subscriber groups with the same type of services, such as a maximum data rate, data usage, and a guaranteed minimum data rate. In addition, the network slice may be implemented according to various purposes.

Referring to FIG. 1, an example of interfaces between respective nodes is illustrated. A Uu interface may be used between the UE 101 and the NG-RAN 102, an N2 interface may be used between the NG-RAN 102 and the AMF 111, an N3 interface may be used between the NG-RAN 102 and the UPF 103, an N4 interface may be used between the SMF 112 and the UPF 103, and an N6 interface may be used between the UPF 103 and each of the 5G RTC AF 121, the 5G RTC WSF 122, and the 5G RTC AS 123 located in a data network (DN). Interfaces between the UE and each of the RTC AF 121 and the RTC AS 122 will be described in more detail in the description of a media architecture to be provided below.

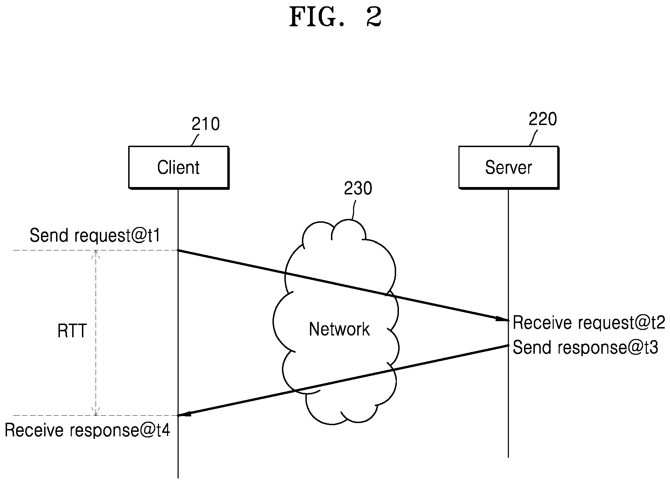

FIG. 2 is a diagram illustrating an example of a method of measuring an RTT in a wireless communication system, according to an embodiment of the present disclosure.

Referring to FIG. 2, it may be assumed that a client 210 and a server 220 are synchronized to the same reference time and are capable of exchanging packets via a network 230. The network 230 may be, for example, a 5GS. In this case, an RTT may be measured according to the following procedure:

- The client 210 transmits an RTT measurement request to the server 220 at time t1.
- The server 220 receives, at time t2, the RTT measurement request transmitted at time t1.
- The server 220 transmits, at time t3, a response to the RTT measurement request received at time t2 to the client 210.
- The client 210 receives, at time t4, the response to the RTT measurement request transmitted at time t1.
- The client 210 calculates the RTT as a difference between time t4 and time t1.

The RTT may include a request processing time, which is a time taken for the server 220 to process a received request and generate and transmit a response thereto. For example, the RTT of FIG. 2 may include the request processing time t3 - t2, which is the time taken from when the server 220 receives the RTT measurement request until the server 220 processes the RTT measurement request and generates and transmits the response. The request processing time may vary depending on a system layer that processes the RTT measurement request. For example, when measuring an RTT of an IP packet by using ICMP, the request processing time may be the time taken for the server 220 to generate and transmit an ICMP echo reply in response to an ICMP echo request received by the server 220. In another example, in TCP, the request processing time may be a time taken for the server 220 to generate and transmit an acknowledgement after receiving a sample segment for RTT measurement transmitted by the client 210.

A real-time communication service, such as a voice call that delivers media via a Real-time Transport Protocol (RTP), may measure an RTT by using an RTP Control Protocol (RTCP). RTT measurement based on RTCP may be performed using an RTCP sender report (SR) and an RTCP receiver report (RR), but in this case, a request processing time may include a waiting time for complying with a report transmission interval. Because the report transmission interval may be affected by factors uncontrollable by the server 220, such as a bandwidth allocated to the RTCP and the number of users participating in an RTP session, when the RTT is measured using the RTCP, only a packet round trip time excluding the request processing time may be considered.

The above-described RTT measurement methods may operate based on client-server transactions. Therefore, it may be difficult to apply such methods to a real-time communication service in which service participants continuously exchange real-time media data with each other. In addition, it is desirable that the request processing time in the real-time communication service include a media processing time rather than a simple packet processing time.

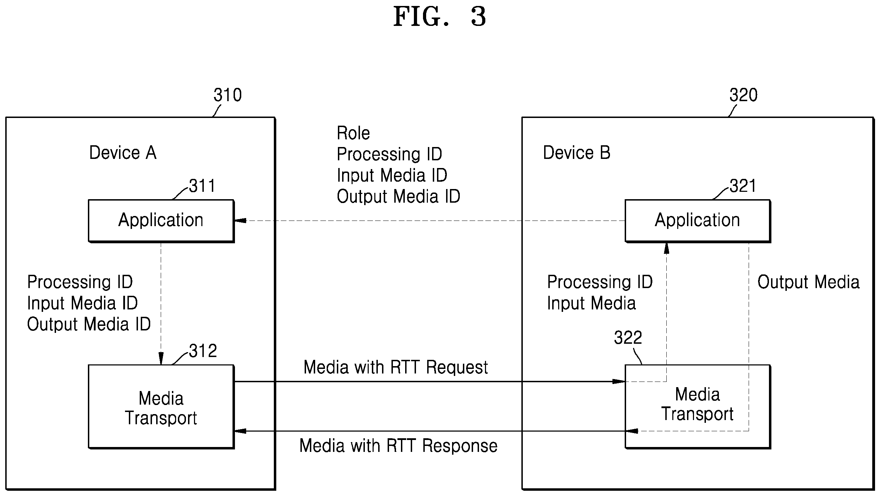

FIG. 3 is a diagram illustrating a media-based RTT measurement method according to an embodiment of the present disclosure.

Referring to FIG. 3, a device A 310 and a device B 320 participate in a real-time service through application programs 311 and 321 running on the respective devices, and may exchange actual media data and requests and responses for RTT measurement via media transport entities 312 and 322.

In a media-based RTT measurement method according to an embodiment of the present disclosure, an application program providing a real-time service may negotiate media-based RTT measurement parameters during a media session establishment procedure. The media-based RTT measurement parameters may include, for example, at least one of a role of each device (client or server), a processing identifier (ID) for measuring a request processing time, an input media ID of a processing identified by the processing ID, and an output media ID of the processing.

In the media-based RTT measurement method according to an embodiment of the present disclosure, the real-time communication service may include one or more media-based RTT measurement sessions, and the role of each device may be determined differently for each of the media-based RTT measurement sessions. Each of the media-based RTT measurement sessions may be defined by, for example, at least one of a client device, a server device, a processing ID, an input media ID, and an output media ID.

In the media-based RTT measurement method, the media transport entities 312 and 322 may transmit media data including an RTT measurement request or response according to their roles. In the embodiment illustrated in the present drawing, for example, a media-based RTT measurement session in which the device A 310 performs a client role and the device B 320 performs a server role may be assumed.

Referring to FIG. 3, the media transport entity 312 of the device A 310 may transmit an RTT request media packet including an RTT request via a media stream identified by an input media ID. Media data included in the media packet together with the RTT request may be referred to as request media data. The media transport entity 322 of the device B 320 may, upon receiving the RTT request media packet, initiate measurement of a request processing time and deliver the request media data to the application program 321.

A result of the application program 321 processing the received request media data through the processing identified by the processing ID may be referred to as response media data. The media transport entity 322 of the device B 320 may transmit an RTT response media packet including the response media data and an RTT response through an output media stream. The device A 310 that has received the RTT response media packet may calculate an RTT as a difference between a reception time of the RTT response media packet and a transmission time of the corresponding RTT request media packet.

The RTT request media packet may include information about a time when the corresponding RTT request media packet is transmitted, and the information may be used by the device B 320, which has received the RTT request media packet, to measure a media transmission delay time between the device A 310 and the device B 320. Similarly, the RTT response media packet may include information about a time when the corresponding RTT response media packet is transmitted, and the information may be used by the device A 310, which has received the RTT response media packet, to measure a media transmission delay time between the device B 320 and the device A 310. At least one of the RTT request media packet and the RTT response media packet may include a processing ID.

The RTT value calculated in the above-described manner may include the request processing time of the device

B 320. In the RTT measurement method according to an embodiment of the present disclosure, the request processing time may be calculated as a difference between a time at which the media transport entity 322 of the device B 320 transmits the RTT response media packet and a time at which the media transport entity 322 of the device B 320 receives the RTT request media packet. For example, the request processing time may be considered as a time taken for the device B 320 to process the request media data and generate the response media data.

According to an embodiment of the present disclosure, the request media data may be transmitted in one or more media packets according to a type of media and a processing method. In addition, because the application program may include one or more processings, the request media data may be delivered to the processing identified by the processing ID after undergoing one or more pre-processings. In addition, the response media data, which is the result of the processing, may also be delivered to the media transport entity after undergoing one or more post-processings.

In the RTT measurement method according to an embodiment of the present disclosure, the RTT response media packet may include information related to the request processing time. The information related to the request processing time may indicate a value of the request processing time, or include at least one parameter that may be used to calculate the request processing time, or a combination thereof. The combination of the at least one parameter that may be used to calculate the request processing time may be a combination of the time when the RTT request media packet is received and the time when the RTT response media packet is transmitted. In addition, the information related to the request processing time may further include time information related to the above-described pre-processing and post-processing.

In a real-time communication service supporting media-based RTT measurement according to an embodiment of the present disclosure, media data may be transmitted using RTP, and the RTT request and the RTT response may be transmitted using RTP header extensions. In this case, the media-based RTT measurement parameters may be negotiated between service participants via a Session Description Protocol (SDP).

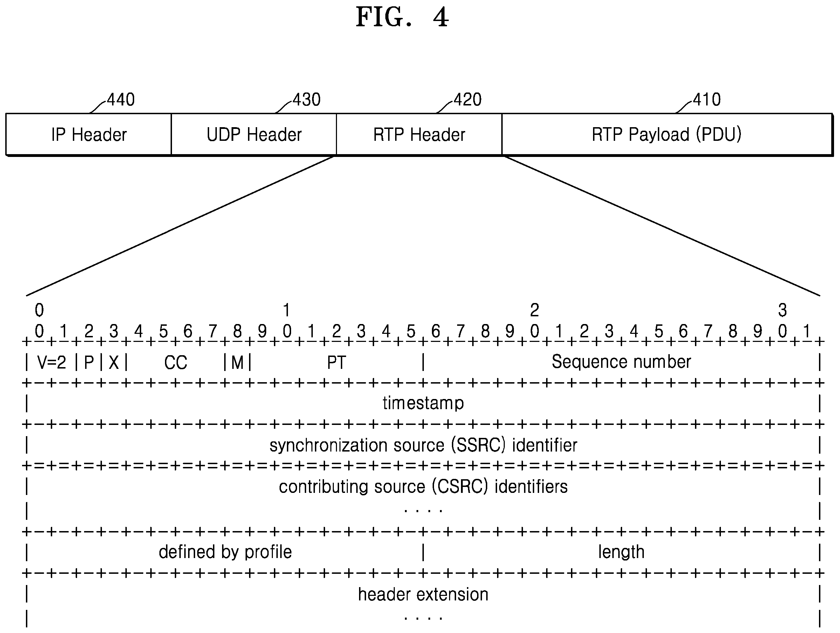

FIG. 4 is a diagram illustrating an example of a media transport packet structure in a wireless communication system, according to an embodiment of the present disclosure.

Referring to FIG. 4, an RTP header 420, a user datagram protocol (UDP) header 430, and an IP header 440 may be added to transmit an RTP payload 410 including media data. The RTP header 420 may include an RTP header extension. Referring to FIG. 4, the first 12 octets or 12 bytes of the RTP header 420 may be included in every RTP packet, and contributing source (CSRC) IDs may be added by RTP middleboxes such as a mixer. The RTP header 420 may include at least one of the fields described below. In addition, a value set in each field and/or a bit length of each field are merely examples provided for convenience of understanding, and the scope of the present disclosure is not limited by such specific values.

- version (V): a 2-bit field indicating the version of RTP. RTP compliant with Internet Engineering Task Force (IETF) Request for Comments (RFC) 3550 has a value of 2.
- padding (P): a 1-bit field having a value of 1 when an RTP packet includes a padding octet.
- extension (X): a 1-bit field having a value of 1 when the RTP packet includes a header extension.
- CSRC count (CC): a 4-bit field indicating the number of CSRC IDs following the 12-octet fixed header.
- marker (M): a 1-bit field whose usage may be defined by an RTP profile. For example, when a single video frame is divided into a plurality of RTP packets and transmitted, only an M field value of the last RTP packet among the RTP packets may be set to 1.
- payload type (PT): a 7-bit field for identifying the format of an RTP payload. The field value may be determined using static mapping defined by an RTP profile or a dynamic mapping determined in an out-of-band manner using SDP.
- sequence number (SN): a 16-bit field that increments by 1 each time an RTP packet is transmitted. The SN may be used by a receiver to detect packet loss and restore packet sequence.
- timestamp: a 32-bit field that can indicate an acquisition time or a playback time of a data sample included in a corresponding RTP packet.
- synchronization source (SSRC): a 32-bit field indicating an ID of a synchronization source.
- CSRC: a 32-bit field indicating an ID of a contributing source.

According to an embodiment of the present disclosure, a real-time media service may include one or more media transport sessions, and information about each media transport session may consist of a 5-tuple (a source IP address, a destination IP address, a source port number, a destination port number, and a transport protocol). Accordingly, packets using RTP/UDP/IP protocols, like the packet illustrated in FIG. 4, and having the same source/destination IP addresses in the IP header 440 and the same source/destination port numbers in the UDP header 430 may be considered as packets belonging to one media transport session. One media transport session may include one or more RTP streams. Here, an RTP stream is a flow of RTP packets having the same SSRC field value, and each of the packets may include media data or data for loss recovery, such as redundant data and forward error correction (FEC) repair data.

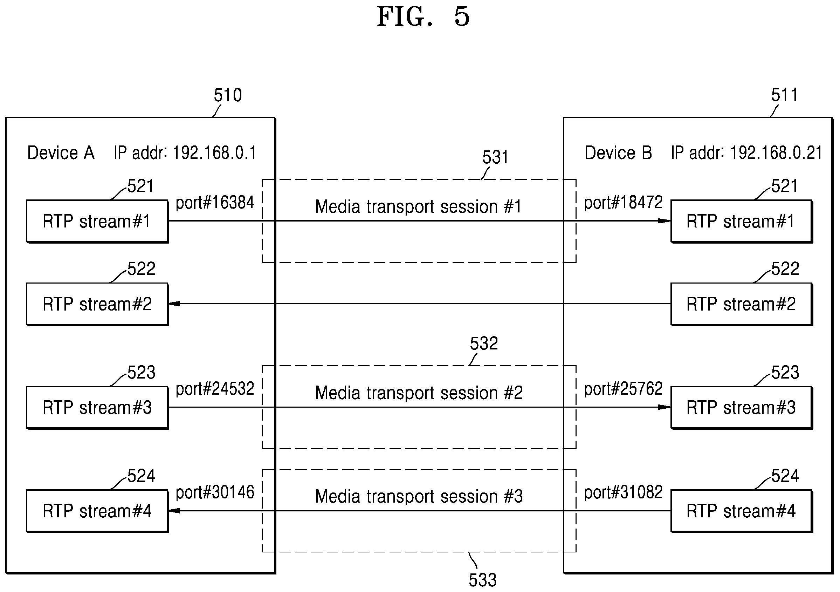

FIG. 5 is a diagram illustrating a relationship between a media transport session and an RTP stream constituting a

real-time communication service in a wireless communication system, according to an embodiment of the present disclosure.

Referring to FIG. 5, it may be assumed that IP addresses of a device A 510 and a device B 511 participating in a real-time communication service are, for example, 192.168.0.1 and 192.168.0.21, respectively. The real-time communication service may, for example, consist of four media streams, and each media stream may be transmitted as an associated RTP stream 521, 522, 523, or 524.

In a media-based RTT measurement method according to an embodiment of the present disclosure, an RTT measurement request and a response may be transmitted through the same media transport session. For example, a first RTP stream 521 and a second RTP stream 522 may be transmitted via a first media transport session 531, and, in the first media transport session 531, a port number of the device A 510 may be, for example, 16384, and a port number of the device B 511 may be, for example, 18472.

In this example, the first RTP stream 521 may be defined as an RTP packet flow having a source IP address and a source port number (a source transport address) of 192.168.0.1:16384, a destination IP address and a destination port number (a destination transport address) of 192.168.0.21:18472, and the same SSRC field value (e.g., 0x38a95a7e). In addition, the second RTP stream 522 may be defined as an RTP packet flow having a source transport address and a destination transport address of 192.168.0.21:18472 and 192.168.0.1:16384, respectively, and the same SSRC field value (e.g., 0x8ecd3af7). In this case, according to an embodiment of the present disclosure, a media-based RTT measurement session may be configured by at least one of the following:

- RTT measurement client: device A (192.168.0.1)
- RTT measurement server: device B (192.168.0.21)
- Input media ID: at least one of a source transport address of 192.168.0.1:16384, a destination transport address of 192.168.0.21:18472, SSRC = 0x38a95a7e, and a separate ID
- Output media ID: at least one of a source transport address of 192.168.0.21:18472, a destination transport address of 192.168.0.1:16384, SSRC = 0x8ecd3af7, and a separate ID
- Processing ID

In another example, a media-based RTT measurement session for the first media transport session 531 may be configured by at least one of the following:

- RTT measurement client: device B (192.168.0.21)
- RTT measurement server: device A (192.168.0.1)
- Input media ID: at least one of a source transport address of 192.168.0.21:18472, a destination transport address of 192.168.0.1:16384, SSRC = 0x8ecd3af7, and a separate ID
- Output media ID: at least one of a source transport address of 192.168.0.1:16384, a destination transport address of 192.168.0.21:18472, SSRC = 0x38a95a7e, and a separate ID
- Processing ID

In a media-based RTT measurement method according to an embodiment of the present disclosure, an RTT measurement request and a response may be transmitted through different media transport sessions. For example, a third RTP stream 523 may be transmitted through a second media transport session 532, and, in the second media transport session 532, a port number of the device A 510 may be, for example, 24532, and a port number of the device B 511 may be, for example, 25762. In addition, a fourth RTP stream 524 may be transmitted through a third media transport session 533, and, in the third media transport session 533, a port number of the device A 510 may be, for example, 30146, and a port number of the device B 511 may be, for example, 31082.

In this example, the third RTP stream 523 may be defined as an RTP packet flow having a source transport address and a destination transport address of 192.168.0.1:24532 and 192.168.0.21:25762, respectively, and an identical SSRC field value (e.g., 0x54c8bd21). In addition, the fourth RTP stream 522 may be defined as an RTP packet flow having a source transport address and a destination transport address of 192.168.0.21:31082 and 192.168.0.1:30146, respectively, and the same SSRC field value (e.g., 0x8ecd3af7). In this case, according to an embodiment of the present disclosure, a media-based RTT measurement session may be configured by at least one of the following:

- RTT measurement client: device A (192.168.0.1)
- RTT measurement server: device B (192.168.0.21)
- Input media ID: at least one of a source transport address of 192.168.0.1:24532, a destination transport address of 192.168.0.21:25762, SSRC = 0x54c8bd21, and a separate ID
- Output media ID: at least one of a source transport address of 192.168.0.21:31082, a destination transport address of 192.168.0.1:30146, SSRC = 0x8ecd3af7, and a separate ID

- Processing ID

In another example, a media-based RTT measurement session for the second media transport session 532 and the third media transport session 533 may be configured by at least one of the following:

- RTT measurement client: device B (192.168.0.21)
- RTT measurement server: device A (192.168.0.1)
- Input media ID: at least one of a source transport address of 192.168.0.21:31082, a destination transport address of 192.168.0.1:30146, SSRC = 0x8ecd3af7, and a separate ID
- Output media ID: at least one of a source transport address of 192.168.0.1:24532, a destination transport address of 192.168.0.21:25762, SSRC = 0x54c8bd21, and a separate ID
- Processing ID

In the above-described embodiments, the separate ID that may be used as a parameter value for the input media ID or the output media ID may be negotiated during a session establishment procedure using SDP or the like. For example, a value of an "a=label:" attribute, which is a sub-attribute of a media description (m-line) included in the SDP, may be used as the input media ID or the output media ID.

Moreover, an RTP header extension may consist of a header and extension data. Here, the header may have a length of 1 byte (One-Byte Header Form) or 2 bytes (Two-Byte Header Form), and may include an ID field and a length field. A format of the extension data portion may be specified by a uniform resource identifier (URI).

The ID field indicates a local ID of the RTP header extension, and a length thereof may be 4 bits in the One-Byte Header Form and 8 bits in the Two-Byte Header Form. Mapping between the local ID and the URI may be negotiated during a session establishment procedure using SDP or the like. In the case of the One-Byte Header Form, the length field may be 4 bits long and indicate a value obtained by subtracting 1 from a length of the following extension data in bytes, and in the case of the Two-Byte Header Form, the length field may be 8 bits long and indicate a length of the following extension data in bytes.

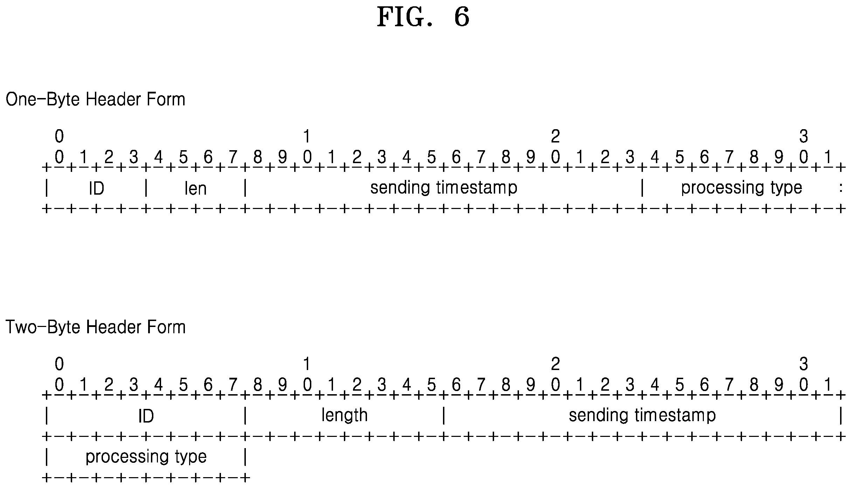

FIG. 6 is a diagram illustrating an example of an RTT request header extension according to an embodiment of the present disclosure.

For example, a URI of an RTP header extension of FIG. 6 may be defined in a format including "urn:3gpp:rtt-measurement-request". Referring to FIG. 6, the header extension may include at least one of the following fields:

- sending timestamp: a time at which an RTP packet (an RTT request media packet) including the RTP header extension is transmitted by an RTT measurement client. The timestamp may be a counter value based on a Network Time Protocol (NTP) or a system clock.
- processing type: an ID indicating processing for measuring a request processing time. A specific meaning thereof may be defined by an application program. For example, a value of 0x00 may indicate an operation in which a media-based RTT measurement server receives the RTT request media packet and immediately generates and transmits an RTT response media packet. This field may be optionally present, and the presence thereof may be negotiated during a session establishment procedure using SDP or the like.

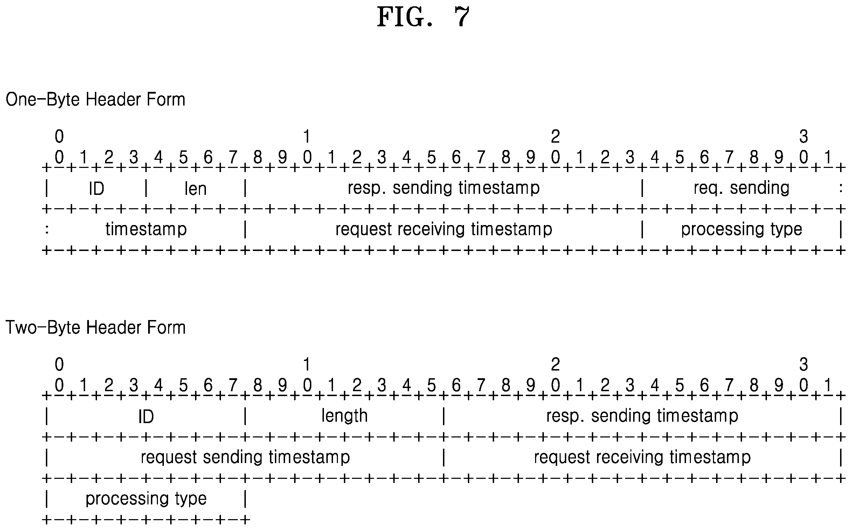

FIG. 7 is a diagram illustrating an example of an RTT response header extension, according to an embodiment of the present disclosure.

For example, a URI of an RTP header extension of FIG. 7 may be defined in a format including "urn:3gpp:rtt-measurement-response". Referring to FIG. 7, the header extension may include at least one of the following fields:

- response sending timestamp: a time at which an RTP packet (an RTT request media packet) including the RTP header extension is transmitted by an RTT measurement server. The timestamp may be a counter value based on NTP or a system clock.
- request sending timestamp: a time at which an RTP request media packet associated with the RTT response media packet is transmitted, e.g., a sending timestamp field value of the associated RTP request media packet.
- request receiving timestamp: a time at which the RTP request media packet associated with the RTT response media packet is received by the RTT measurement server.
- processing type: an ID indicating processing for measuring a request processing time. A specific meaning thereof may be defined by an application program. For example, a value of 0x00 may indicate an operation in which the media-based RTT measurement server receives the RTT request media packet and immediately generates and transmits an RTT response media packet. This field may be optionally present, and the presence thereof may be negotiated during a session establishment procedure using SDP or the like.

An RTT measurement client that has received the RTT response header extension defined in the format including "urn:3gpp:rtt-measurement-response" may obtain at least one piece of information related to an RTT and a transport time as follows by using timestamp values of the RTT response header extension.

- ■ T4 - T1 = RTT
- ■ T3 - T2 = response processing time
- ■ T2 - T1 = packet transmission time from the RTT measurement client to the RTT measurement server
- ■ T4 - T3 = packet transmission time from the RTT measurement server to the RTT measurement client

Here, T1 is a request sending timestamp value, T2 is a request receiving timestamp value, T3 is a response sending timestamp value, and T4 may represent a time at which the RTT measurement client receives the RTP packet including the RTT response header extension.

According to an embodiment of the present disclosure, by using the request sending timestamp value of the RTT response header extension, the RTT measurement client may verify whether the RTT response header extension is a valid response to an RTT request header extension actually transmitted by the RTT measurement client.

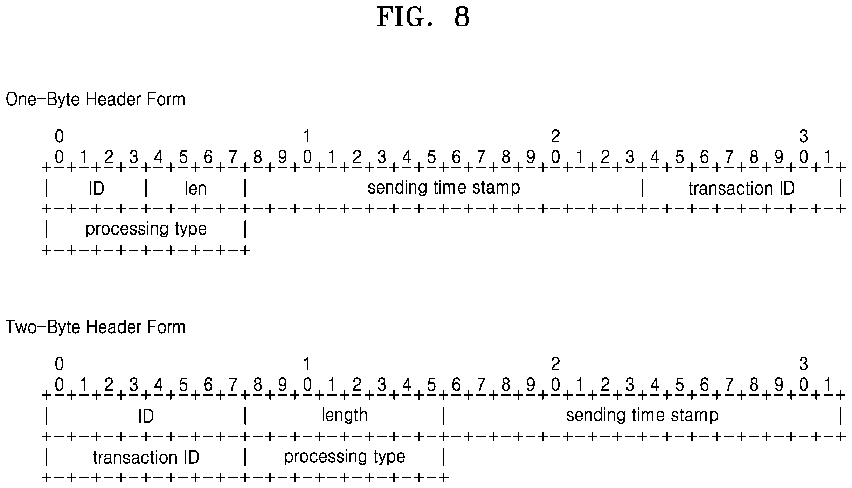

FIG. 8 is a diagram illustrating an example of an RTT request header extension according to an embodiment of the present disclosure.

For example, a URI of an RTP header extension of FIG. 8 may be defined in a format including "urn:3gpp:rtt-measurement-request-transid". Referring to FIG. 8, the header extension may include at least one of the following fields:

- sending timestamp: a time at which an RTP packet (an RTT request media packet) including the RTP header extension is transmitted by an RTT measurement client. The timestamp may be a counter value based on NTP or a system clock.
- transaction ID: an ID of a transaction including the corresponding RTT request header extension. The transaction may consist of transmission of the RTP packet including the RTT request header extension and reception of the RTP packet including the corresponding RTT response header extension.
- processing type: an ID indicating processing for measuring a request processing time. A specific meaning thereof may be defined by an application program. For example, a value of 0x00 may indicate an operation in which a media-based RTT measurement server receives the RTT request media packet and immediately generates and transmits an RTT response media packet. This field may be optionally present, and the presence thereof may be negotiated during a session establishment procedure using SDP or the like.

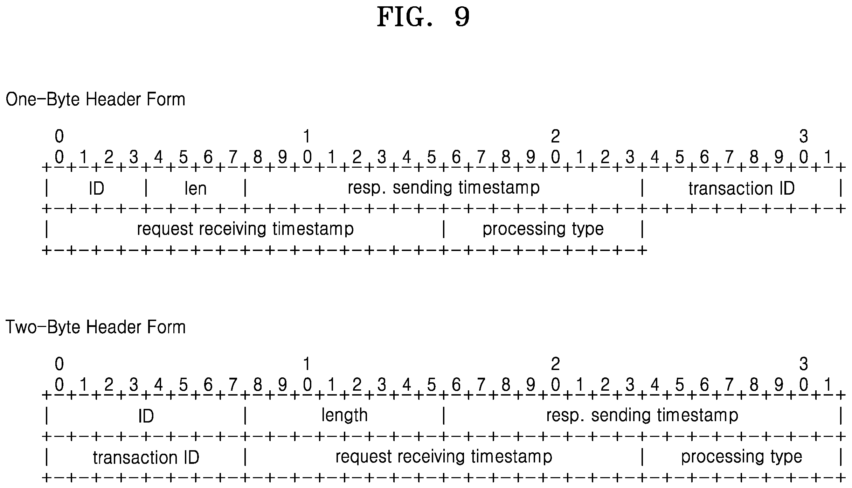

FIG. 9 is a diagram illustrating an example of an RTT response header extension according to an embodiment of the present disclosure.

For example, a URI of an RTP header extension of FIG. 9 may be defined in a format including "urn:3gpp:rtt-measurement-response-transid". Referring to FIG. 9, the header extension may include at least one of the following fields:

- response sending timestamp: a time at which an RTP packet (an RTT request media packet) including the RTP header extension is transmitted by an RTT measurement server. The timestamp may be a counter value based on NTP or a system clock.
- transaction ID: an ID of a transaction including the corresponding RTT response header extension. It may have the same value as a transaction ID of an associated RTT request header extension.
- request receiving timestamp: a time at which an RTP request media packet associated with the RTT response media packet (wherein a transaction ID value of the RTT request header extension is identical to that of the RTT response header extension) is received by the RTT measurement server.
- processing type: an ID indicating processing for measuring a request processing time. A specific meaning thereof may be defined by an application program. For example, a value of 0x00 may indicate an operation in which a media-based RTT measurement server receives the RTT request media packet and immediately generates and transmits an RTT response media packet. This field may be optionally present, and the presence thereof may be negotiated during a session establishment procedure using SDP or the like.

An RTT measurement client that has received the RTT response header extension defined in the format including "urn:3gpp:rtt-measurement-response-transid" may obtain at least one piece of information related to an RTT and a transport time as follows by using timestamp values of the RTT response header extension.

■ T4 - T1 = RTT

■ T3 - T2 = response processing time

■ T2 - T1 = packet transmission time from the RTT measurement client to the RTT measurement server

■ T4 - T3 = packet transmission time from the RTT measurement server to the RTT measurement client

Here, T1 may represent a time at which the RTT measurement client transmits an RTP packet including an RTT request header extension having the same value as a transaction ID of the RTT response header extension, T2 may represent a request receiving timestamp value, T3 may represent a response sending timestamp value, and T4 may represent a time at which the RTT measurement client receives an RTP packet including the RTT response header extension.

In another embodiment of the RTT response header extension illustrated in FIG. 9, the request receiving timestamp may be replaced with another value that enables calculation of the RTT, the request processing time, the packet transmission time from the RTT measurement client to the RTT measurement server, and/or the packet transmission time from the RTT measurement server to the RTT measurement client. For example, the request receiving timestamp may be provided as a client-to-server transmission delay indicating the packet transmission time from the RTT measurement client to the RTT measurement server, or as a processing time indicating a request processing time of the RTT measurement server.

In a media-based RTT measurement method according to an embodiment of the present disclosure, parameters related to an RTT measurement session may be determined during an SDP negotiation process. For example, an m-line (media description) of the negotiated SDP may include at least one of the following extmap attributes:

a = extmap: <value>["/"<direction>] <URI> <extensionattributes>

- <value>: an ID field value of a header extension identified by <URI> (a local ID)
- <direction>: may have a value of "sendonly", "recvonly", "sendrecv", or "inactive"
- <URI>: a URI for identifying a header extension
- <extensionattributes>: header extension configuration information

In a parameter negotiation process for media-based RTT measurement according to an embodiment of the present disclosure, the <direction> parameter may be defined as shown in Table 1 below.

[Table 1]

| | sendonly | recvonly | sendrecv |
|---|---|---|---|
| RTT request header extension | RTT measurement client role | RTT measurement server role | RTT measurement server/client role |
| RTT response header extension | RTT measurement server role | RTT measurement client role | |

In the parameter negotiation process for the media-based RTT measurement according to an embodiment of the present disclosure, the <extensionattributes> parameter may include information for associating an RTT request RTP stream with an RTT response RTP stream. The RTT request RTP stream may refer to an RTP stream to which an RTP packet including an RTT request header extension belongs, and the RTT response RTP stream may refer to an RTP stream to which an RTP packet including an RTT response header extension belongs. The RTT request/response RTP stream may refer to all RTP streams described in a media description (m-line) to which an a=extmap attribute configuring the RTT request/response header extension belongs, or may refer only to an RTP stream having a specific SSRC field value.

For example, the <extensionattributes> parameter may include an RTT measurement session ID. The RTT measurement session ID may be a separately assigned value, or at least one of an SSRC value and an "a=label:" attribute value of the media description (m-line) including the corresponding a=extmap attribute.

In the parameter negotiation process for the media-based RTT measurement according to an embodiment of the present disclosure, the <extensionattributes> parameter may include processing-related information for a request processing time. For example, the processing-related information may be a list of processing IDs associated with a corresponding RTT measurement session. When the processing-related information provides a single processing ID, a processing type parameter may be omitted from the above-described RTT request/response header.

For example, the <extensionattributes> parameter may be defined as shown in [Table 2] below.

[Table 2]

```
extensionattributes = format[";"ssrc][";" rttsession*2(";"rttsession)]
[";"processingtype]
format = "short" / "long" / "shortlong"
ssrc = "ssrc=" ssrc-id
ssrc-id = integer; 0 ..  2**32 - 1
rttsession = rttsessionid / requestlabel / responselabel
rttsessionid = "rttsessionid=" zeroto255
requestlabel = "reqlabel=" token [;"reqssrc"=ssrc-id]
responselabel = "resplabel=" token [;"respssrc"=ssrc-id]
processingtype = "processtype=" processtypevalue
processtyepvalue = "all" / processtypelist
processtypelist = processtypevalue *(","processtypevalue)
processtypevalue = zeroto255; 0 ..255
```

A format parameter in Table 2 above having a value of "shortlong" may indicate that a header of an RTP header extension described by an associated extmap attribute may be selectively used in either a 1-byte form (One-Byte Header Form) or a 2-byte form (Two-Byte Header Form). In another embodiment, when a length of the RTP header extension described by the associated extmap attribute is not specified, the format parameter may be omitted instead of having the value of "shortlong".

For example, the RTT measurement sessions described above with reference to FIG. 5 may be defined in an SDP offer of the device A 510, as shown in Table 3 below.

[Table 3]

```
m=video 16384
a=sendrecv
a=extmap:1 /sendonly urn:3gpp:rtt-measurement-request short
a=extmap:2 /recvonly urn:3gpp:rtt-measurement-response short
m=audio 24532
a=sendonly
a=extmap:1 /sendonly urn:3gpp:rtt-measurement-request short;
rttsessionid=1;processtype=all
m=video 30146
a=recvonly
a=extmap:1 /sendonly urn:3gpp:rtt-measurement-response short;
rttsessionid=1;processtype=all
```

In another example, the RTT measurement sessions of FIG. 5 may be defined in an SDP offer of the device B 511, as shown in Table 4 below.

[Table 4]

```
m=video 18472
label=mainvideo
a=sendrecv
```

```
a=extmap:1 /sendonly urn:3gpp:rtt-measurement-request short;resplabel=
mainvideo;processingtype=1
a=extmap:2 /recvonly urn:3gpp:rtt-measurement-response short;reqlabel=
mainvideo;processingtype=1
m=audio 25762
label=inputaudio
a=recvonly
a=extmap:1 /recvonly urn:3gpp:rtt-measurement-request short; resplabel=
outputvideo;processtype=2
m=video 31082
label=outputvideo
a=sendonly
a=extmap:1 /sendonly urn:3gpp:rtt-measurement-response short; reqlabel=
inputaudio;processtype=2
```

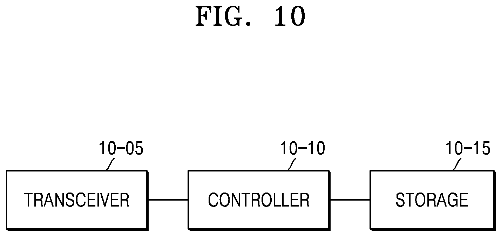

FIG. 10 is a diagram illustrating a structure of a device according to an embodiment of the present disclosure.

For example, the device may refer to either the RTT measurement client or the RTT measurement server described above with reference to FIGS. 1 to 9.

Referring to FIG. 10, the device may include a transceiver 10-05, a controller 10-10, and a storage 10-15. According to a communication method of the device, the transceiver 10-05, the controller 10-10, and the storage 10-15 may operate. However, the components of the device are not limited to the above example. For example, the device may include more or fewer components than the components described above. For example, the device may include the transceiver 10-05 and the controller 10-10. Furthermore, the transceiver 10-05, the controller 10-10, and the storage 10-15 may be implemented in the form of a single chip.

The transceiver 10-05 collectively refers to a receiver and a transmitter of the device, and may transmit and receive signals to and from another device (e.g., an RTT measurement server or an RTT measurement client). For this purpose, the transceiver 10-05 may be composed of a radio frequency (RF) transmitter for up-converting and amplifying a frequency of a signal being transmitted and an RF receiver for low-noise amplifying a received signal and down-converting its frequency. However, this is merely an embodiment of the transceiver 10-05, and the components of the transceiver 10-05 are not limited to the RF transmitter and the RF receiver. Furthermore, the transceiver 10-05 may include a wired/wireless transceiver, and may include various components for transmitting and receiving signals. Furthermore, the transceiver 10-05 may receive a signal via a radio channel and output the signal to the controller 10-10, and transmit a signal output from the controller 10-10 via the radio channel. In addition, the transceiver 10-05 may receive a communication signal and output it to a processor, and transmit a signal output from the processor to a network entity over a wired or wireless network.

The storage 10-15 may store programs and data necessary for operations of the device. Furthermore, the memory may store control information or data in a signal obtained by the device. The storage 10-15 may include a storage medium, such as read-only memory (ROM), random access memory (RAM), a hard disc, compact disc ROM (CD-ROM), and a digital versatile disc (DVD), or a combination of storage media.

In the present disclosure, the controller 10-10 may be defined as a circuit or an application-specific integrated circuit (ASIC), or at least one processor. The processor may include a communication processor (CP) for performing control for communication and an application processor (AP) for controlling upper layers such as application programs. The controller 10-10 may control all operations of the device according to an embodiment proposed in the present disclosure. For example, the controller 10-10 may control a flow of signals between blocks to perform operations according to the flowchart described above. The methods according to embodiments described in the appended claims or specification of the present disclosure may be implemented in hardware, software, or a combination of hardware and

software.

When the methods are implemented in software, a computer-readable storage medium or a computer program product having one or more programs (software modules) stored therein may be provided. The one or more programs stored in the computer-readable storage medium or the computer program product is configured for execution by one or more processors within an electronic device. The one or more programs include instructions that cause the electronic device to execute the methods according to the embodiments of the present disclosure described in the claims or specification thereof.

The programs (software modules or software) may be stored in RAM, non-volatile memory including a flash memory, ROM, electrically erasable programmable ROM (EEPROM), a magnetic disc storage device, CD-ROM, DVDs or other types of optical storage devices, or a magnetic cassette. Alternatively, the programs may be stored in a memory that is configured as a combination of some or all of the stated devices. A plurality of such memories may be included.

Furthermore, the programs may be stored in an attachable storage device that may be accessed through a communication network, such as the Internet, Intranet, a local area network (LAN), a wide LAN (WLAN), or a storage area network (SAN), or a communication network composed of a combination thereof. The storage device may connect to a device performing an embodiment of the present disclosure via an external port. Furthermore, a separate storage device on a communication network may also connect to the device performing the embodiment of the present disclosure.

In the specific embodiments of the present disclosure, a component included in the present disclosure is expressed in a singular or plural form depending on the presented specific embodiments. However, singular or plural expressions are selected to be appropriate for the presented context for convenience of description, and the present disclosure is not limited to elements in a singular or plural form, and thus, an element expressed in a plural form may be configured as a single element, or an element expressed in a singular form may be configured as a plurality of elements.

Moreover, the embodiments of the present disclosure disclosed in the specification and the accompanying drawings are provided only as specific examples to facilitate explanation of the technical aspects of the present disclosure and aid in understanding the present disclosure, and are not intended to limit the scope of the present disclosure. In other words, it is obvious to those of ordinary skill in the art that other modifications may be made based on the technical spirit of the present disclosure. Furthermore, the embodiments may be combined with each other for operation when necessary. For example, portions of one embodiment of the present disclosure and another embodiment thereof may be combined with each other to operate a base station and a UE. In addition, the embodiments of the present disclosure may be applicable to other communication systems, and other modifications based on the technical idea of the embodiments may also be implemented. For example, the embodiments may also be applied to an LTE system, a 5G or NR system, and the like.

## Claims

**1.** An operation method of a first device in a wireless communication system, the operation method comprising:

negotiating media parameters with a second device by using a session description protocol (SDP);
transmitting, to the second device, first real-time transport protocol (RTP) data including a first header extension associated with a round-trip time (RTT); and
in response to the first RTP data, receiving, from the second device, second RTP data including a second header extension associated with the RTT,
wherein the SDP for the negotiation of the media parameters includes information for associating the first header extension with the second header extension.

**2.** The operation method of claim 1, wherein the SDP further includes at least one of an attribute value usable for identifying a media description (m-line) describing information on a stream corresponding to the first RTP data, and processing information on the first RTP data.

**3.** The operation method of claim 1, wherein the first header extension includes information indicating a time at which the first device transmits the first RTP data to the second device.

**4.** The operation method of claim 1, wherein

the second header extension includes
information indicating a time at which the first device transmits the first RTP data to the second device,
information indicating a time at which the second device receives the first RTP data from the first device, and
information indicating a time at which the second device transmits the second RTP data to the first device.

5. An operation method of a second device in a wireless communication system, the operation method comprising:

negotiating media parameters with a first device by using a session description protocol (SDP);
receiving, from the first device, first real-time transport protocol (RTP) data including a first header extension associated with a round-trip time (RTT); and
in response to the first RTP data, transmitting, to the first device, second RTP data including a second header extension associated with the RTT, wherein the SDP for the negotiation of the media parameters includes information for associating the first header extension with the second header extension.

6. The operation method of claim 5, wherein the SDP further includes at least one of an attribute value usable for identifying a media description (m-line) describing information on a stream corresponding to the first RTP data, and processing information on the first RTP data.

7. The operation method of claim 5, wherein the first header extension includes information indicating a time at which the first device transmits the first RTP data to the second device.

8. The operation method of claim 5, wherein

the second header extension includes
information indicating a time at which the first device transmits the first RTP data to the second device,
information indicating a time at which the second device receives the first RTP data from the first device, and
information indicating a time at which the second device transmits the second RTP data to the first device.

9. A first device in a wireless communication system, the first device comprising:

a transceiver; and
at least one controller coupled to the transceiver,
wherein the at least one controller is configured to
negotiate media parameters with a second device by using a session description protocol (SDP),
transmit, to the second device, first real-time transport protocol (RTP) data including a first header extension associated with a round-trip time (RTT), and
in response to the first RTP data, receive, from the second device, second RTP data including a second header extension associated with the RTT, wherein the SDP for the negotiation of the media parameters includes information for associating the first header extension with the second header extension.

10. The first device of claim 9, wherein the SDP for the negotiation of the media parameters further includes at least one of an attribute value usable for identifying a media description (m-line) describing information on a stream corresponding to the first RTP data, and processing information on the first RTP data.

11. The first device of claim 9, wherein he first header extension includes information indicating a time at which the first device transmits the first RTP data to the second device.

12. The first device of claim 9, wherein

the second header extension includes
information indicating a time at which the first device transmits the first RTP data to the second device,
information indicating a time at which the second device receives the first RTP data from the first device, and
information indicating a time at which the second device transmits the second RTP data to the first device.

13. A second device in a wireless communication system, the second device comprising:

a transceiver; and
at least one controller coupled to the transceiver,
wherein the at least one controller is configured to
negotiate media parameters with a second device by using a session description protocol (SDP),
receive, from the first device, first real-time transport protocol (RTP) data including a first header extension associated with a round-trip time (RTT), and
in response to the first RTP data, transmit, to the first device, second RTP data including a second header

extension associated with the RTT,
wherein the SDP for the negotiation of the media parameters includes information for associating the first header extension with the second header extension.

**14.** The second device of claim 13, wherein the SDP further includes at least one of an attribute value usable for identifying a media description (m-line) describing information on a stream corresponding to the first RTP data, and processing information on the first RTP data.

**15.** The second device of claim 13, wherein

the first header extension includes information indicating a time at which the first device transmits the first RTP data to the second device, and
the second header extension includes
information indicating a time at which the first device transmits the first RTP data to the second device,
information indicating a time at which the second device receives the first RTP data from the first device, and
information indicating a time at which the second device transmits the second RTP data to the first device.

# FIG. 1

117
UDM
116
AUSF
115
NRF
114
NEF
111
AMF
112
SMF
113
PCF
N2
N4
121
RTC AF
101
UE
Uu
102
NG-RAN
N3
103
UPF
N6
122
RTC AS
DN

FIG. 2

210
220
Client
Server
230
Send request@t1
Network
RTT
Receive request@t2
Send response@t3
Receive response@t4

FIG. 3

320
Device B
321
Application
Output Media
322
Media
Transport
Processing ID
Input Media
Role
Processing ID
Input Media ID
Output Media ID
Media with RTT Request
Media with RTT Response
310
Device A
311
Application
312
Media
Transport
Processing ID
Input Media ID
Output Media ID

FIG. 4

440
IP Header
430
UDP Header
420
RTP Header
410
RTP Payload (PDU)
0 1 2 3
0 1 2 3 4 5 6 7 8 9 0 1 2 3 4 5 6 7 8 9 0 1 2 3 4 5 6 7 8 9 0 1
V=2 | P | X | CC | M | PT | Sequence number
timestamp
synchronization source (SSRC) identifier
contributing source (CSRC) identifiers
. . . .
defined by profile | length
header extension
. . . .

FIG. 5
510
Device A IP addr: 192.168.0.1
511
Device B IP addr: 192.168.0.21
521
RTP stream#1
522
RTP stream#2
523
RTP stream#3
524
RTP stream#4
port#16384
port#18472
port#24532
port#25762
port#30146
port#31082
531
Media transport session #1
532
Media transport session #2
533
Media transport session #3

# FIG. 6

One-Byte Header Form

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|  ID   |  len  |     sending timestamp           | processing type :
+-+-+-+-+-+-+-+-+-+-+-+-+-+-+-+-+-+-+-+-+-+-+-+-+-+-+-+-+-+-+-+-+
```

Two-Byte Header Form

0
1
2
3
0 1 2 3 4 5 6 7 8 9 0 1 2 3 4 5 6 7 8 9 0 1 2 3 4 5 6 7 8 9 0 1
ID
length
sending timestamp
processing type

FIG. 7

One-Byte Header Form

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|  ID   |  len  |    resp. sending timestamp    | req. sending  :
+-+-+-+-+-+-+-+-+-+-+-+-+-+-+-+-+-+-+-+-+-+-+-+-+-+-+-+-+-+-+-+-+
:   timestamp   |  request receiving timestamp  |processing type|
+-+-+-+-+-+-+-+-+-+-+-+-+-+-+-+-+-+-+-+-+-+-+-+-+-+-+-+-+-+-+-+-+
```

Two-Byte Header Form

0
1
2
3
0 1 2 3 4 5 6 7 8 9 0 1 2 3 4 5 6 7 8 9 0 1 2 3 4 5 6 7 8 9 0 1
ID
length
resp. sending timestamp
request sending timestamp
request receiving timestamp
processing type

FIG. 8

One-Byte Header Form
0 1 2 3
0 1 2 3 4 5 6 7 8 9 0 1 2 3 4 5 6 7 8 9 0 1 2 3 4 5 6 7 8 9 0 1
ID
len
sending time stamp
transaction ID
processing type
Two-Byte Header Form
0 1 2 3
0 1 2 3 4 5 6 7 8 9 0 1 2 3 4 5 6 7 8 9 0 1 2 3 4 5 6 7 8 9 0 1
ID
length
sending time stamp
transaction ID
processing type

# FIG. 9

One-Byte Header Form

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|   ID  |  len  |    resp. sending timestamp    | transaction ID|
+-+-+-+-+-+-+-+-+-+-+-+-+-+-+-+-+-+-+-+-+-+-+-+-+-+-+-+-+-+-+-+-+
|   request receiving timestamp |processing type|
+-+-+-+-+-+-+-+-+-+-+-+-+-+-+-+-+-+-+-+-+-+-+-+-+
```

Two-Byte Header Form

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|      ID       |    length     |    resp. sending timestamp    |
+-+-+-+-+-+-+-+-+-+-+-+-+-+-+-+-+-+-+-+-+-+-+-+-+-+-+-+-+-+-+-+-+
| transaction ID|  request receiving timestamp  |processing type|
+-+-+-+-+-+-+-+-+-+-+-+-+-+-+-+-+-+-+-+-+-+-+-+-+-+-+-+-+-+-+-+-+
```

FIG. 10

10-05
10-10
10-15
TRANSCEIVER
CONTROLLER
STORAGE

## INTERNATIONAL SEARCH REPORT

International application No.
**PCT/KR2024/017280**

**A. CLASSIFICATION OF SUBJECT MATTER**

**H04L 43/0864**(2022.01)i

According to International Patent Classification (IPC) or to both national classification and IPC

**B. FIELDS SEARCHED**

Minimum documentation searched (classification system followed by classification symbols)

H04L 43/0864(2022.01); G10L 21/034(2013.01); H04L 65/1069(2022.01); H04L 65/1101(2022.01); H04L 65/65(2022.01); H04M 11/00(2006.01); H04M 3/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RTP(Real-Time Transport Protocol), 확장 헤더(extension header), SDP(Session Description Protocol), RTT(round-trip time), 교섭(negotiation)

**C. DOCUMENTS CONSIDERED TO BE RELEVANT**

| Category* | Citation of document, with indication, where appropriate, of the relevant passages | Relevant to claim No. |
|---|---|---|
| Y | QUALCOMM INCORPORATED. [5G_RTP] RTP header extension for in-band end-to-end delay measurement. S4aR230103, SA4#125-e (AH) RTC SWG post 125-e. 10 October 2023. See sections 4.4.3.1-4.4.3.5 and figure 4.4.3.1-1. | 1-15 |
| Y | US 2023-0064508 A1 (SAMSUNG ELECTRONICS CO., LTD.) 02 March 2023 (2023-03-02) See paragraph [0011]. | 1-15 |
| A | QUALCOMM INCORPORATED. [5G_RTP] RTP header extension for in-band end-to-end delay measurement. S4-231180, 3GPP SA4 #125 Meeting. Goteborg, Sweden. 15 August 2023. See section 4.4.3, figure 4.4.3.1-1. | 1-15 |
| A | US 2022-0311814 A1 (TENCENT AMERICA LLC) 29 September 2022 (2022-09-29) See paragraphs [0035]-[0047]. | 1-15 |
| A | JP 6454683 B2 (PANASONIC INTELLECTUAL PROPERTY CORP. OF AMERICA) 16 January 2019 (2019-01-16) See paragraphs [0032]-[0058]. | 1-15 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **12 February 2025** | **13 February 2025** |


| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |


Form PCT/ISA/210 (second sheet) (July 2022)

**INTERNATIONAL SEARCH REPORT**
**Information on patent family members**

International application No.
**PCT/KR2024/017280**

| Patent document cited in search report | Publication date (day/month/year) | Patent family member(s) | Publication date (day/month/year) |
|---|---|---|---|
| US 2023-0064508 A1 | 02 March 2023 | KR 10-2022-0033445 A | 16 March 2022 |
| | | US 11503087 B2 | 15 November 2022 |
| | | US 11805156 B2 | 31 October 2023 |
| | | US 2022-0078215 A1 | 10 March 2022 |
| US 2022-0311814 A1 | 29 September 2022 | CN 115486058 A | 16 December 2022 |
| | | EP 4094431 A1 | 30 November 2022 |
| | | EP 4094431 B1 | 23 October 2024 |
| | | JP 2023-525481 A | 16 June 2023 |
| | | JP 7518195 B2 | 17 July 2024 |
| | | KR 10-2022-0137938 A | 12 October 2022 |
| | | WO 2022-212159 A1 | 06 October 2022 |
| JP 6454683 B2 | 16 January 2019 | EP 3113468 A1 | 04 January 2017 |
| | | EP 3113468 B1 | 08 April 2020 |
| | | US 10594744 B2 | 17 March 2020 |
| | | US 2016-0308919 A1 | 20 October 2016 |
| | | WO 2015-129181 A1 | 03 September 2015 |

Form PCT/ISA/210 (patent family annex) (July 2022)